# EUROPÄISCHE PATENTSCHRIFT

(11) **EP 2 325 478 B1**
(45) Veröffentlichungstag und Bekanntmachung des Hinweises auf die Patenterteilung: **13.08.2014**
(21) Anmeldenummer: 10187441.0
(22) Anmeldetag: 13.10.2010
(51) Int. Cl.: F03D 1/06, F03D 1/00, F03D 11/00

(54) **Rotorblatt mit Entwässerungsbohrung**
Rotor blade with drainage drill hole
Pale de rotor dotée d'un trou de drainage

(30) Priorität: 02.11.2009 DE 102009046293
(43) Veröffentlichungstag der Anmeldung: 25.05.2011
(73) Patentinhaber: SENVION SE, 22297 Hamburg (DE)
(72) Erfinder: Bendel, Urs, 24787 Fockbek (DE); Zeller, Lenz Simon, 24114 Kiel (DE)
(74) Vertreter: Seemann, Ralph

(56) Entgegenhaltungen:
- DE-A1-102008 002 983
- DE-A1-102008 055 479
- US-A1- 2009 226 702

## Beschreibung

Die Erfindung betrifft ein Verfahren zum Fertigen eines Rotorblatts für eine Windenergieanlage, das im Bereich der Rotorblattspitze eine Entwässerungsbohrung aufweist, ein Rotorblatt für eine Windenergieanlage mit einer Entwässerungsbohrung im Bereich der Rotorblattspitze, eine Windenergieanlage mit einem entsprechenden Rotorblatt und die Verwendung eines Flächenelements in einem Rotorblatt für eine Windenergieanlage, das im Bereich der Rotorblattspitze eine Entwässerungsbohrung aufweist.

Im Innenraum von Rotorblättern von Windenergieanlagen sammelt sich infolge von Kondensation oder von direktem Eindringen Wasser, das abgeführt werden muss. Falls das Wasser nicht entweichen kann, besteht im Winter die Gefahr, dass das Wasser gefriert und durch die Ausdehnung beim Gefrieren das Rotorblatt beschädigt oder zerstört. Ein weiteres Gefahrenpotential besteht darin, dass infolge von Blitzschlag in die Rotorblattspitze das dort angesammelte Wasser schlagartig verdampft, wodurch das Rotorblatt ebenfalls beschädigt oder zerstört werden kann. Bei Rotorblättern für Windenergieanlagen ist daher im Bereich der Rotorblattspitze eine Entwässerungsbohrung vorgesehen, die die Innenseite des Rotorblatts mit seiner Außenseite verbindet und das Austreten des Wassers ermöglicht.

Aus EP 1 342 009 B1 ist ein Rotorblatt für Windenergieanlagen bekannt, das im Bereich der Rotorblattspitze einen Blitzfinger aufweist, der in einer Bohrung in der Blattspitze angeordnet ist. Blitzfinger und Bohrung bilden gemeinsam ein Entwässerungssystem für das Rotorblatt.

In DE 10 2004 028 917 A1 ist ein Rotorblatt für eine Windenergieanlage offenbart, das mindestens einen Hohlraum aufweist, der an eine Außenseite des Rotorblatts angrenzt und über mindestens eine Entwässerungsbohrung mit der Außenseite verbunden ist. Dabei ist in dem Hohlraum ein wasserdurchlässiges Auffangelement, etwa ein Sieb, so angeordnet, dass Wasser aus dem Hohlraum durch das Auffangelement zu der Entwässerungsbohrung gelangt. Damit wird verhindert, dass die Entwässerungsbohrung sich nach einiger Zeit mit Schmutz und Kleinteilen zusetzt, die im Inneren des Rotorblatts ebenfalls vorhanden sind und mit dem Wasser durch die Entwässerungsbohrung ausgespült werden können.

Die in diesen Dokumenten beschriebenen Rotorblattspitzen sind in der Herstellung sehr aufwändig, da sie die Entwässerungsbohrungen an der äußersten Blattspitze aufweisen, so dass an dieser Stelle eine sehr genaue Passformung und Fertigung notwendig ist. Bei einer Bauweise eines Rotorblattes mit Halbschalen oder mit entsprechenden Formteilen bildet eine entsprechende Entwässerungsbohrung, die in einer zu verklebenden Fuge zwischen den Halbschalen angeordnet ist, außerdem eine strukturelle Schwachstelle der Verklebung, so dass das Rotorblatt an der Rotorblattspitze strukturell geschwächt ist.

Alternativ kann eine Entwässerungsbohrung auch im Bereich der Rotorblattspitze an der Saugseite oder Druckseite des Rotorblatts vorgesehen sein. Die Profilvorderkante eines Rotorblattes ist über die Saugseite und die Druckseite mit der Profilhinterkante des Rotorblattes verbunden. Die Saugseite des Rotorblatts ist gegenüber der Druckseite die Seite mit der längeren Strömungsfläche.

Auch, wenn eine Entwässerungsbohrung im Bereich der Rotorblattspitze an der Saug- oder Druckseite eines Rotorblatts angeordnet ist, wird das Wasser bei rotierendem Rotor unter Einwirkung der Zentrifugalkraft aus dem Innenraum des Rotorblattes aus der Entwässerungsöffnung gedrückt.

Ein weiterer Effekt, der die Entwässerung unterstützt, besteht darin, dass wegen des nach dem Bernoulli'schen Prinzip niedrigen Luftdrucks der mit hoher Geschwindigkeit an der Saugseite vorbeiströmenden Luft Wasser durch die Entwässerungsbohrung aus dem Innenraum des Rotorblattes herausgesaugt wird. Das Rotorblatt ist an seiner Blattwurzel üblicherweise nicht hermetisch abgeschlossen, so dass eine Luftströmung aufgrund dieses Effekts entstehen kann. Diese Wirkung tritt in etwas geringerem Ausmaß auch an der Druckseite des Rotorblattes auf, so dass eine Saugbohrung auch an der Druckseite eines Rotorblattes angeordnet sein kann.

Eine Schwierigkeit bei der Herstellung einer Entwässerungsbohrung an der Saug- oder Druckseite des Rotorblatts im Bereich der Rotorblattspitze besteht darin, dass Rotorblätter im Allgemeinen aus Halbschalen, d.h. Formteilen, die die Saugseite bzw. die Druckseite darstellen, gefertigt sind, die miteinander verklebt werden.

Entsprechende Formteile sind bei größeren Windenergieanlagen im Allgemeinen in Faserverbundtechnik aus Glasfasern und/oder Kohlefasern gefertigt, die mit Kunstharzen, wie Polyesterharzen oder Epoxidharzen verbunden werden. Die Halbschalen können auch jeweils aus mehreren Formteilen jeweils für die Druckseite und für die Saugseite hergestellt sein, die ebenfalls miteinander verbunden werden müssen.

Zum Herstellen einer sicheren Verbindung werden die Formteile der Druckseite mit den Formteilen der Saugseite im Allgemeinen verklebt. Geeignete Verbindungsmittel sind insbesondere Klebstoffe oder Klebstoffgemische, beispielsweise aus Polyesterharzen und/oder Epoxidharzen. Gerade im Bereich der Rotorblattspitze ist dafür eine große Menge von Klebstoff notwendig.

Da das Verbindungsmittel beim Verkleben der Formteile miteinander flüssig ist und ein Klebstoffüberschuss unvermeidbar ist, um eine sichere Verklebung zu garantieren, kann das Verbindungsmittel unkontrolliert in den Innenraum des Rotorblattes laufen. Da die Klebstoffausbreitung im Inneren des Blattes jedoch unkontrolliert geschieht, ist es nicht möglich, immer an der gleichen Stelle eine Entwässerungsbohrung zu setzen, da diese Stelle von Verbindungsmittel überdeckt sein kann. Wird allerdings die Entwässerungsbohrung prophylaktisch immer in einem ausreichend großen Abstand von der Blattspitze gebohrt, so kann sich unter Umständen eine erhebliche Menge Wasser im Blattinneren sammeln.

DE 10 2008 002 983 A1 betrifft eine Rotorflügel-Drainageeinrichtung für eine Windkraftanlage mit wenigstens einem hohlen Rotorflügel. Eine Drainageöffnung ist in einem spitzen Abschnitt des Rotorflügels angeordnet. Ein Leitblech, das im Inneren des Rohrflügels und im Inneren der Drainageöffnung angeordnet ist, um einen Strom von Partikeln zu der Drainageöffnung zu begrenzen, sowie eine flexible Drainageleitung, die im Inneren des Rotorflügels angeordnet ist, um mit der Drainageöffnung strömungsmäßig verbunden zu sein, sind ebenfalls umfasst. Eine nicht flexible Drainageleitung ist im Inneren des Rotorflügels angeordnet, um mit der flexiblen Drainageleitung strömungsmäßig verbunden zu sein, wobei die nicht flexible Leitung mit einer Anzahl von Öffnungen zum Aufnehmen eines Fluidstroms aus dem Inneren des Rotorflügels ausgebildet ist. Zusätzlich zu den flexiblen und nicht flexiblen Drainageleitungen kann der Rotorflügel außerdem mit einem Leitblech versehen sein, das im Inneren des Rotorflügels und im Inneren der Drainageöffnung angeordnet ist, um den Strom von Partikeln zu der Drainageöffnung zu begrenzen.

DE 10 2008 055 479 A1 betrifft ein Verfahren zum Aufbau eines Windkraftanlagenflügels. Es werden ein Druckseiten-Vorformling-Element und ein Saugseiten-Vorformling-Element erzeugt sowie entweder eine Vorderkante und/oder eine Hinterkante. Zur Erzeugung der Vorderkante oder der Hinterkante wird ein Kappen-Vorformling-Element an entweder einen Abschnitt des Druckseiten-Vorformling-Elements oder einen Abschnitt des Saugseiten-Vorformling-Elements angekoppelt. Wenigstens ein Abschnitt entweder des Druckseiten-Vorformling-Elements oder des Saugseiten-Vorformling-Elements überlappt wenigstens einen Abschnitt des Verbindungskappen-Vorformling-Elements.

Ausgehend von diesem Stand der Technik liegt der vorliegenden Erfindung die Aufgabe zugrunde, ein Verfahren zur Herstellung eines Rotorblatts für eine Windenergieanlage sowie ein entsprechendes Rotorblatt anzugeben, mit dem es möglich ist, auf effiziente und einfache Weise ein Rotorblatt herzustellen, bei dem an einer vorher definierten Stelle im Bereich der Rotorblattspitze eine Entwässerungsbohrung hergestellt werden kann, unabhängig von dem Ausmaß eines Klebstoffüberschusses.

Diese Aufgabe wird gelöst durch ein Verfahren zum Fertigen eines Rotorblatts für eine Windenergieanlage, wobei das gefertigte Rotorblatt in seiner Längserstreckung, die sich von einer Rotorblattwurzel im Wesentlichen zu einer Rotorblattspitze erstreckt, wenigstens einen Bereich aufweist, in der das Rotorblatt ein aerodynamisches Querschnittsprofil aufweist, das eine Profilvorderkante und eine Profilhinterkante aufweist, die über eine Saugseite und eine Druckseite des Querschnittsprofils verbunden sind, wobei wenigstens ein erstes und wenigstens ein zweites in Längsrichtung des Rotorblatts gefertigtes Formteil für eine Saugseite und eine Druckseite des Rotorblatts vorgesehen sind, die in den Bereichen der Profilvorderkante und der Profilhinterkante jeweils miteinander zu verbinden sind, das sich durch die folgenden Verfahrensschritte auszeichnet:
- wenigstens im Bereich der Rotorblattspitze wird oder ist an der Profilvorderkante mittels eines Verbindungsmittels ein Verbindungselement mit einer Innenseite des wenigstens einen ersten Formteils verbunden, wobei das Verbindungselement an der Profilvorderkante über das erste Formteil hinausragt,
- im Bereich der Rotorblattspitze wird oder ist ein Flächenelement mit dem Verbindungselement an der Profilvorderkante verbunden oder ist einstückig mit dem Verbindungselement ausgebildet, wobei das Flächenelement im Bereich der Profilhinterkante im Wesentlichen bündig mit dem ersten Formteil abschließt,
- das wenigstens eine zweite Formteil wird mit dem ersten Formteil zusammengefügt, wobei an der Profilvorderkante eine Innenseite des zweiten Formteils mit dem über das erste Formteil hinausragenden Teil des Verbindungselements verbunden wird und an der Profilhinterkante ein Verbindungsmittel zwischen die ersten und zweiten Formteile eingeführt wird,
- im durch das Flächenelement von der Profilhinterkante abgeschlossenen Bereich des ersten Formteils ist oder wird eine Entwässerungsbohrung gebohrt oder angeordnet.

Die Erfindung beruht auf dem Grundgedanken, dass mittels des Flächenelements sowohl an der Profilvorderkante als auch an der Profilhinterkante verhindert wird, dass ein Überschuss oder eine große Menge von Verbindungsmitteln in den Innenraum des Rotorblatts läuft und dort die Stelle überdeckt, an der die Entwässerungsöffnung angebracht werden soll. Dadurch, dass der Innenraum bzw. die Innenfläche des Rotorblattes an der Stelle der Entwässerungsbohrung glatt und frei von Verbindungsmittel ist, ist ein geregelter und zügiger Abfluss von Wasser nach außen durch die Entwässerungsbohrung gewährleistet. Verbindungsmittel sind erfindungsgemäß insbesondere Klebstoffe, wie beispielsweise Kunstharz, insbesondere Polyesterharz oder Epoxidharz.

An der Profilvorderkante wird oder ist somit erfindungsgemäß zunächst ein Verbindungselement mit der vorderen Kante des ersten Formteils verbunden, welches im Rahmen der vorliegenden Erfindung dasjenige Formteil aufweist, für das eine Entwässerungsbohrung vorgesehen ist. Dieses Verbindungselement, das insbesondere eine Kleblasche sein kann, weist das erfindungsgemäße Flächenelement auf oder wird anschließend mit dem Flächenelement verbunden. Das erfindungsgemäße Flächenelement muss das Verbindungsmittel, also einen Klebstoff wie beispielsweise ein Kunstharz, auch im flüssigen Zustand effektiv zurückhalten, kann aber wasserdurchlässig oder wasserundurchlässig sein. Der im Wesentlichen bündige Abschluss des Flächenelements mit dem ersten Formteil im Bereich der Profilhinterkante bewirkt, dass auch von dieser Seite ein Eindringen von Verbindungsmittel verhindert oder so weit begrenzt wird, dass die Entwässerungbohrung bzw. die dafür vorgesehene Stelle nicht mit Verbindungsmittel überdeckt wird.

Je nachdem, ob eine Entwässerungsbohrung an der Saugseite oder der Druckseite angeordnet sein soll, handelt es sich bei dem wenigstens einen ersten Formteil um das Formteil der Saugseite und bei dem wenigstens einen zweiten Formteil um das Formteil der Druckseite oder umgekehrt.

In einer vorteilhaften Weiterbildung wird das Flächenelement an seiner von der Rotorblattspitze abgewandten Kante im Bereich zwischen den Verbindungsmitteln mit dem zweiten Formteil verbunden. Somit schließt das Flächenelement an seinem zur Rotorblattwurzel weisenden Ende mit der Innenseite des zweiten Formteils vollständig ab, so dass sich in dem Zwischenraum zwischen dem Flächenelement und dem zweiten Formteil kein Wasser sammeln kann. Dies ist insbesondere dann von Vorteil, wenn das Flächenelement selbst wasserundurchlässig ist.

Vorzugsweise wird das Flächenelement mit seiner zur Rotorblattspitze hin angeordneten Kante an eine Blitzschutzadapterrippe angelegt oder auf eine Blitzschutzadapterrippe aufgelegt. Damit wird verhindert, dass zwischen dem Flächenelement und der Blitzschutzadapterrippe ein Hohlraum entsteht, in dem sich Wasser sammeln kann.

Das Verbinden der ersten und zweiten Formteile, des Verbindungselements und/oder des Flächenelements geschieht vorzugsweise durch Verkleben und/oder durch Laminieren. Als Klebstoff sind dabei insbesondere Kunstharze wie Epoxidharz oder Polyesterharze vorgesehen.

Vorzugsweise härtet vor dem Zusammenfügen der ersten und zweiten Formteile das Verbindungsmittel zwischen dem ersten Formteil und dem Verbindungselement an der Profilvorderkante aus oder ist bereits ausgehärtet. Da an der Profilvorderkante das Verbindungselement, beispielsweise eine Kleblasche, passgenau mit dem ersten Formteil verklebt werden kann, ist an dieser Stelle relativ wenig Verbindungsmittel notwendig, so dass die Gefahr, dass Verbindungsmittel in den Innenraum, d.h. auf die Innenseite des ersten Formteils, läuft, relativ gering ist.

Die Maßnahme, die Verbindung zwischen dem Verbindungselement und dem ersten Formteil zunächst aushärten zu lassen oder eine bereits ausgehärtete Verbindung zu verwenden, bevor das Zusammenfügen von ersten und zweiten Formteilen erfolgt, hat den Vorteil, dass die größere Menge an Verbindungsmittel, die an der Profilvorderkante zwischen dem Verbindungselement und dem zweiten Formteil nötig ist, nicht durch einen Spalt zwischen Verbindungselement und dem ersten Formteil laufen kann, da diese Verbindung bereits ausgehärtet ist.

Die der Erfindung zugrunde liegende Aufgabe wird ebenfalls gelöst durch ein Rotorblatt für eine Windenergieanlage, wobei das Rotorblatt eine Längserstreckung aufweist, die sich von einer Rotorblattwurzel im Wesentlichen zu einer Rotorblattspitze erstreckt, wobei wenigstens in einem Bereich des Rotorblatts ein aerodynamisches Querschnittsprofil vorgesehen ist, das eine Profilvorderkante und eine Profilhinterkante aufweist, die über eine Saugseite und eine Druckseite des Querschnittsprofils verbunden sind, wobei für die Saugseite und für die Druckseite des Rotorblatts jeweils wenigstens ein erstes Formteil und wenigstens ein zweites Formteil vorgesehen sind, die wenigstens im Bereich der Rotorblattspitze an der Profilvorderkante und an der Profilhinterkante miteinander mittels jeweils wenigstens eines Verbindungsmittels und/oder Verbindungselements verbunden sind, wobei an der Saugseite oder der Druckseite im Bereich der Rotorblattspitze eine Entwässerungsbohrung vorgesehen ist, das dadurch weitergebildet ist, dass im Bereich der Rotorblattspitze ein Flächenelement vorgesehen ist, das in Richtung auf die Rotorblattwurzel zu wenigstens bis zur Entwässerungsbohrung reicht, wobei das Flächenelement die Verbindungsmittel und/oder Verbindungselemente an der Profilvorderkante und der Profilhinterkante kontaktiert oder damit verbunden ist und im Bereich der Profilhinterkante für Verbindungsmittel im Wesentlichen undurchlässig bündig mit dem ersten Formteil abschließt.

Das erfindungsgemäße Rotorblatt mit dem erfindungsgemäßen Flächenelement hat ebenfalls den Vorteil, dass eine Entwässerungsbohrung an der Saugseite im Bereich der Rotorblattspitze definiert an einer Position sehr nahe an der Rotorblattspitze erzeugt werden konnte, ohne dass die Gefahr besteht, dass an dieser Stelle die Innenseite des ersten Formteils mit überschüssigem Klebstoff benetzt und verunreinigt ist. Dies führt zu einer sicheren Entwässerung und somit zu einem auch langfristig sicher zu betreibenden Rotorblatt.

Dieses erfindungsgemäße Rotorblatt ist vorzugsweise nach dem oben beschriebenen erfindungsgemäßen Verfahren hergestellt.

Vorzugsweise umfasst das Flächenelement eine ein- oder mehrlagige Glasfasermatte oder ein Aluminiumblech. Beide Alternativen sind leichtgewichtige Ausführungsformen, die den Zweck, überschüssigen Klebstoff zurückzuhalten, erfüllen, ohne das Gewicht des Rotorblatts im Bereich der Rotorblattspitze signifikant zu erhöhen. Da außerdem das Flächenelement dem Verbindungsmittel einen definierten Raum vorgibt, in dem sich das Verbindungsmittel ausbreiten kann, der wesentlich kleiner ist als der zuvor offene Innenraum des Rotorblatts an der Rotorblattspitze, ist es auch möglich, wesentlich weniger Klebstoff zu verwenden als zuvor, so dass die erfindungsgemäße Maßnahme zu einer Gewichtsreduktion führen kann oder die Gewichtssteigerung durch eine Einsparung an Verbindungsmitteln wenigstens teilweise ausgeglichen wird.

Eine vorteilhafte Weiterbildung erfährt das Rotorblatt, wenn das Flächenelement zur Rotorblattspitze hin an eine Adapterrippe eines Blitzschutzes anschließt oder auf einer Adapterrippe eines Blitzschutzes aufgelegt ist.

Vorzugsweise ist das Flächenelement an seinem von der Rotorblattspitze abgewandten Ende im Bereich zwischen den Verbindungsmitteln mit dem zweiten Formteil verbunden oder weist einen Abstand von weniger als 10 mm, insbesondere weniger als 3 mm, von dem zweiten Formteil auf.

Eine besonders einfache bevorzugte Ausbildung zeichnet sich dadurch aus, dass das Verbindungselement und das Flächenelement einstückig ausgebildet sind. Dies erspart einen Verfahrensschritt, bei dem das Flächenelement mit dem Verbindungselement verbunden wird.

Wenn das wenigstens eine Verbindungselement an der Profilvorderkante eine, insbesondere gewirkte oder gewebte, Klebelasche umfasst, die die Saugseite und die Druckseite überlappt und mit den ersten und zweiten Formteilen verklebt und/oder laminiert ist, ist eine besonders effiziente und sichere Verbindung der Formteile an der Profilvorderkante gewährleistet.

Die der Erfindung zugrunde liegende Aufgabe wird ebenfalls gelöst durch eine Windenergieanlage mit einem erfindungsgemäßen Rotorblatt.

Die der Erfindung zugrunde liegende Aufgabe wird schließlich auch durch die Verwendung eines Flächenelements in einem zuvor beschriebenen erfindungsgemäßen Rotorblatt für eine Windenergieanlage gelöst, das im Bereich der Rotorblattspitze eine Entwässerungsbohrung aufweist, zum Freihalten der Entwässerungsbohrung von einem Verbindungsmittel.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Rotorblatts,
- Fig. 2: einen Querschnitt durch ein erfindungsgemäßes Rotorblatt in schematischer Darstellung und
- Fig. 3: eine schräge Draufsicht auf einen Teil eines erfindungsgemäßen Rotorblatts in schematischer Darstellung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

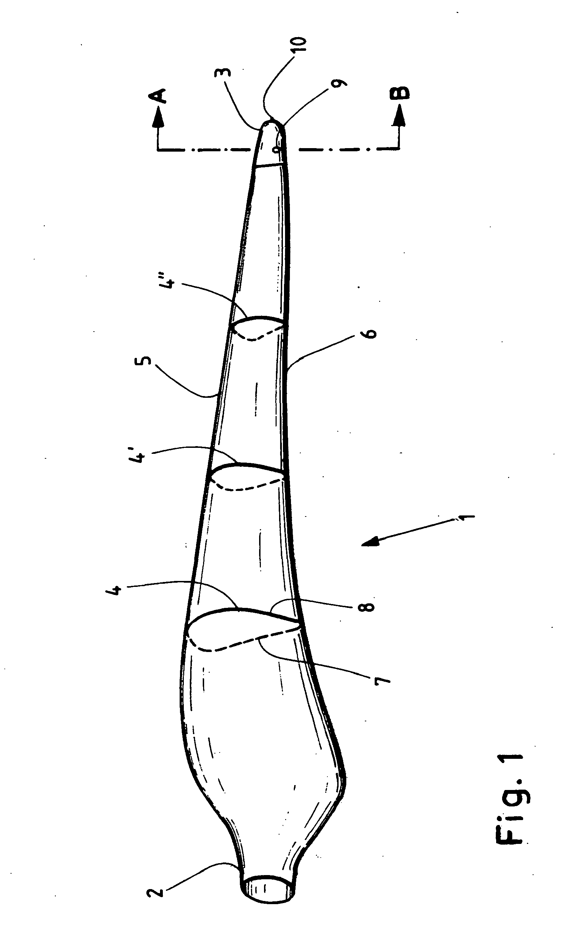

In Fig. 1 ist schematisch ein Rotorblatt 1 dargestellt, das sich im Wesentlichen längs von einer Rotorblattwurzel 2 zu einer Rotorblattspitze 3 erstreckt. Über den größten Teil der Längserstreckung weist das Rotorblatt 1 ein Querschnittsprofil, das anhand von Linien an drei Stellen, nämlich am Querschnittsprofil 4 in der Nähe der Rotorblattwurzel 2, am Querschnittsprofil 4' in der Mitte und einem Querschnittsprofil 4" zur Rotorblattspitze 3 hin dargestellt ist.

Jedes der Querschnittsprofile 4, 4', 4" erstreckt sich von einer Profilvorderkante 5 zu einer Profilhinterkante 6 und weist eine Saugseite 7 sowie eine Druckseite 8 auf. Das Profil an der Saugseite 7 ist im Allgemeinen länger als das an der Druckseite 8, so dass Luft an der Saugseite 7 schneller strömen muss und einen niedrigeren Luftdruck aufweist als an der Druckseite 8.

Im Bereich der Rotorblattspitze 3 ist dargestellt, dass eine Entwässerungsbohrung 9 vorgesehen ist sowie ein Blitzrezeptor 10 direkt an der Rotorblattspitze 3. Der Blitzrezeptor 10 kann einen Metallstift oder eine Metallfläche, beispielsweise eine Aluminiumfläche, aufweisen, die mit einer Blitzableitung in Form eines Blitzkabels im Inneren des Rotorblatts 1 verbunden ist, beispielsweise über einen Blitzschutzadapter. Ein solcher Blitzschutzadapter kann als Blitzschutzadapterrippe ausgebildet sein. Die Entwässerungsbohrung hat im Allgemeinen einen Durchmesser von 6 mm bis 10 mm und kann in Aluminiumteilen des Blitzschutzes, direkt an der Rotorblattspitze 3 oder außerhalb des Aluminiumteils des Blitzschutzes angeordnet sein, aber immer noch in der Nähe der Rotorblattspitze 3.

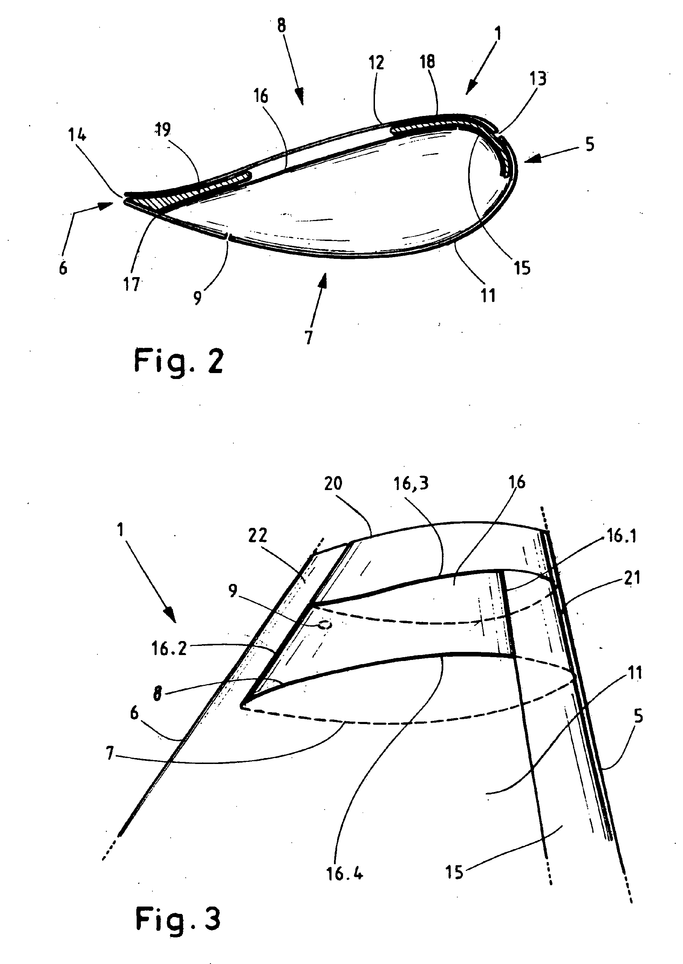

In Fig. 2 ist ein Querschnitt durch ein erfindungsgemäßes Rotorblatt 1 im Bereich der Rotorblattspitze dargestellt, wobei dieser Querschnitt die Entwässerungsbohrung 9 umfasst. Der Querschnitt entspricht einem Schnitt entlang der Linie A-A aus Fig. 1.

Das Rotorblatt 1 besteht in Fig. 2 an dieser Position aus zwei Halbschalen, nämlich einer Halbschale bzw. einem Formteil 11 der Saugseite 7 sowie einer Halbschale bzw. einem Formteil 12 der Druckseite 8. Der Weg, den die Luft beim Umströmen des Rotorblatts zurücklegt, ist an der Saugseite 7 größer als an der Druckseite 8. Die Entwässerungsbohrung 9 ist im Formteil 11 der Saugseite 7 angeordnet. Daher handelt es sich bei dem Formteil 11 der Saugseite 7 erfindungsgemäß um das erste Formteil 11 und bei dem Formteil 12 der Druckseite 8 um das zweite Formteil 12. Diese Bezeichnung kann sich umkehren, wenn eine Entwässerungsbohrung an der Druckseite anstatt an der Saugseite vorgesehen ist.

Im Bereich der Profilvorderkante 5 ist im Inneren des Rotorblatts 1 eine Klebelasche 15 vorgesehen, die eine vordere Stoßkante 13 zwischen den Halbschalen bzw. Formteilen 11 und 12 überbrückt. Dies bedeutet, dass das Verbindungselement 15, in diesem Fall eine Klebelasche, sowohl das Formteil 11 als auch das Formteil 12 teilweise überlappt und mit diesem fest verbunden werden kann. Auf diese Weise wird eine sichere Verbindung an der Profilvorderkante 5 hergestellt, obwohl die Formteile 11 und 12 an dieser Stelle einander nicht überlappen, sondern nur aneinander stoßen.

Hierzu wird zunächst das vordere Ende des Verbindungselements bzw. der Klebelasche 15 mittels eines Verbindungsmittels 18 mit dem vorderen Bereich des Formteils 11 der Saugseite 7 verbunden und die Verbindung wird ggf. ausgehärtet oder man lässt sie aushärten. Anschließend wird das Flächenelement 16 mit der hinteren Kante des Verbindungselements 15 verbunden, beispielsweise verklebt. Das Flächenelement 16 kann auch einstückig mit dem Verbindungselement bzw. der Klebelasche 15 ausgebildet sein. In diesem Fall entfällt eine Verbindung, da das Flächenelement 16 bereits vorhanden ist.

Das Flächenelement 16 liegt im Bereich der Profilhinterkante 6 in einem Berührungspunkt 17 bzw. einer Berührungslinie auf der Innenseite des Formteils 11 der Saugseite 7 auf, so dass das Verbindungsmittel 19, das zwischen die Formteile 11 und 12 an der Profilhinterkante 6 eingeführt wird, nicht weiter in den Innenraum des Rotorblatts 1 eindringt. Dadurch wird der Innenraum, d.h. die Innenfläche des ersten Formteils 11 jenseits des Berührungspunktes 17 des Flächenelements 16 mit dem ersten Formteil 11 von Verbindungsmittel freigehalten.

Andererseits ist mit einer vergleichsweise geringen Menge an Verbindungsmittel 19 auch im Bereich der Profilhinterkante 6 an einer hinteren Stoßkante 14 eine sichere Verklebung der beiden Formteile 11 und 12 gewährleistet. Überschüssiges Verbindungsmittel 19 rinnt dabei nicht an der Innenseite des Formteils 11 der Saugseite 7 herab, sondern füllt den Zwischenraum zwischen dem Flächenelement 16 und der Innenseite des Formteils 12 der Druckseite 8 aus.

An der Profilvorderkante wird beim Zusammenfügen der Formteile 11 und 12 weiteres Verbindungsmittel 18 in den Zwischenraum zwischen Klebelasche 15 und Flächenelemente 16 einerseits und der Innenseite des Formteils 12 der Druckseite 8 andererseits eingefügt, so dass auch hier eine sichere Verbindung hergestellt wird, ohne dass Verbindungsmittel 18 in dem Innenraum jenseits des Flächenelements 16 eindringen kann.

Auf diese Weise wird sichergestellt, dass an der vorgesehenen Stelle, an der eine Entwässerungsbohrung 9 vorgesehen ist, kein Verbindungsmittel und kein Klebstoff die Entwässerungsbohrung verhindert. An der glatten Innenseite des Formteils 11 der Saugseite 7 ist außerdem eine geregelte Entwässerung gewährleistet.

In Fig. 3 ist die Situation aus Fig. 2 perspektivisch dargestellt, allerdings unter Weglassung des Formteils 12 der Druckseite 8. Die perspektivische schematische Ansicht geht schräg herab von der Druckseite und geht in Richtung der nicht dargestellten Rotorblattspitze 3.

An der rechten Seite ist die Profilvorderkante 5 dargestellt, an der linken Seite die Profilhinterkante 6. In Richtung der Rotorblattspitze 3 ist eine Blitzschutzadapterrippe 20 dargestellt, an die sich das Flächenelement 16 anschließt, das mit verstärkten Linien optisch hervorgehoben ist. An der Unterseite ist das Formteil 11 der Saugseite 7 dargestellt. Dies weist an der Profilvorderkante 5 eine Kante auf, die in Fig. 2 der Kante, die an die Stoßkante 13 anstößt, entspricht.

An der Profilhinterkante 6 verläuft das Formteil 11 relativ flach nach hinten, wie dies auch aus Fig. 2 hervorgeht. Von der Blitzschutzadapterrippe 20 in Richtung auf die Rotorblattwurzel 2 hin schließt sich das Flächenelement 16 an. Die blattspitzenseitige Kante 16.3 des Flächenelements 16 schließt an die Blitzschutzadapterrippe 20 direkt an oder liegt auf dieser auf. Die blattwurzelseitige Kante 16.4 des Flächenelements 16 hat einen geringen Abstand zum Formteil 12 der Druckseite 7 oder ist mit dem Formteil 12 verbunden, was allerdings in Fig. 3 nicht dargestellt ist.

Die vordere Kante 16.4 des Flächenelements ist mit der Klebelasche 15 verbunden, die sich in Fig. 3 nicht nur an der Stelle des Flächenelements 16 erstreckt, sondern entlang der Vorderseite des Formteils 11 der Saugseite in Richtung der Rotorblattwurzel 2 weiterverläuft. So wird eine sichere Verbindung der Formteile 11 und 12 der Saugseite 6 und der Druckseite 8 entlang der gesamten Profilvorderkante 5 gewährleistet.

Die hintere Kante 16.2 des Flächenelements 16 liegt auf der Innenseite des Formteils 11 der Saugseite 7 auf. Die Fläche 22 hinter der hinteren Kante 16.2 des Flächenelements 16 ist eine Klebefläche, die vollständig mit Verbindungsmitteln 19 versehen wird, um eine sichere Verklebung bzw. Verbindung der Formteile 11 und 12 der Saugseite 7 und der Druckseite 8 zu gewährleisten.

Angedeutet sind durch gestrichelte Linien auch die Konturen der Saugseite 7 an der Stelle der blattspitzenseitigen Kante 16.3 und der blattwurzelseitigen Kante 16.4 des Flächenelements 16, so dass diese im Zusammenhang die Querschnittsprofile an diesen Stellen entlang der Längserstreckung des Rotorblatts 1 darstellen.

Ebenfalls dargestellt ist eine Entwässerungsbohrung 9 in dem Formteil 11 der Saugseite 7, die sehr weit in Richtung der Rotorblattspitze 3 und in Richtung der Profilhinterkante 6 angeordnet ist. An dieser Stelle wäre ohne ein erfindungsgemäßes Flächenelement 16 damit zu rechnen, dass ein Film von überschüssigem Verbindungsmittel 19 vorhanden wäre, der eine Anbringung einer Entwässerungsbohrung 9 behindern würde und eine geregelte Entwässerung erschweren würde.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Rotorblatt
- 2: Rotorblattwurzel
- 3: Rotorblattspitze
- 4, 4', 4": Querschnittsprofil
- 5: Profilvorderkante
- 6: Profilhinterkante
- 7: Saugseite
- 8: Druckseite
- 9: Entwässerungsbohrung
- 10: Blitzrezeptor
- 11: erstes Formteil
- 12: zweites Formteil
- 13: vordere Stoßkante
- 14: hintere Stoßkante
- 15: Klebelasche
- 16: Flächenelement
- 16.1: vordere Kante des Flächenelements
- 16.2: hintere Kante des Flächenelements
- 16.3: blattspitzenseitige Kante des Flächenelements
- 16.4: blattwurzelseitige Kante des Flächenelements
- 17: Berührungspunkt
- 18, 19: Verbindungsmittel
- 20: Blitzschutzadapterrippe
- 21: Vorderkante des Formteils
- 22: Klebefläche

## Patentansprüche

1. Verfahren zum Fertigen eines Rotorblatts (1) für eine Windenergieanlage, wobei das gefertigte Rotorblatt (1) in seiner Längserstreckung, die sich von einer Rotorblattwurzel (2) im Wesentlichen zu einer Rotorblattspitze (3) erstreckt, wenigstens einen Bereich aufweist, in der das Rotorblatt ein aerodynamisches Querschnittsprofil (4, 4', 4") aufweist, das eine Profilvorderkante (5) und eine Profilhinterkante (6) aufweist, die über eine Saugseite (7) und eine Druckseite (8) des Querschnittsprofils (4, 4', 4") verbunden sind, wobei wenigstens ein erstes und wenigstens ein zweites in Längsrichtung des Rotorblatts (1) gefertigtes Formteil (11, 12) für eine Saugseite (7) und eine Druckseite (8) des Rotorblatts (1) vorgesehen sind, die in den Bereichen der Profilvorderkante (5) und der Profilhinterkante (6) jeweils miteinander zu verbinden sind, **gekennzeichnet durch** die folgenden Verfahrensschritte:
- wenigstens im Bereich der Rotorblattspitze (3) wird oder ist an der Profilvorderkante (5) mittels eines Verbindungsmittels (18) ein Verbindungselement (15) mit einer Innenseite des wenigstens einen ersten Formteils (11) verbunden, wobei das Verbindungselement (15) an der Profilvorderkante (5) über das erste Formteil (11) hinausragt,
- im Bereich der Rotorblattspitze (3) wird oder ist ein Flächenelement (16) mit dem Verbindungselement (15) an der Profilvorderkante (5) verbunden oder ist einstückig mit dem Verbindungselement (15) ausgebildet, wobei das Flächenelement (16) im Bereich der Profilhinterkante (6) im Wesentlichen bündig mit dem ersten Formteil (11) abschließt,
- das wenigstens eine zweite Formteil (12) wird mit dem ersten Formteil (11) zusammengefügt, wobei an der Profilvorderkante (5) eine Innenseite des zweiten Formteils (12) mit dem über das erste Formteil (11) hinausragenden Teil des Verbindungselements (15) verbunden wird und an der Profilhinterkante (6) ein Verbindungsmittel (19) zwischen die ersten und zweiten Formteile (11, 12) eingeführt wird,
- im **durch** das Flächenelement (16) von der Profilhinterkante (6) abgeschlossenen Bereich des ersten Formteils (11) ist oder wird eine Entwässerungsbohrung (9) gebohrt oder angeordnet.

2. Verfahren nach Anspruch 1, **dadurch gekennzeichnet, dass** das Flächenelement (16) an seiner von der Rotorblattspitze (3) abgewandten Kante (16.4) im Bereich zwischen den Verbindungsmitteln (18, 19) mit dem zweiten Formteil (12) bündig schließend verbunden wird.

3. Verfahren nach Anspruch 1 oder 2, **dadurch gekennzeichnet, dass** das Flächenelement (16) mit seiner zur Rotorblattspitze hin angeordneten Kante (16.3) an eine Blitzschutzadapterrippe (20) angelegt oder auf eine Blitzschutzadapterrippe (20) aufgelegt wird.

4. Verfahren nach einem der Ansprüche 1 bis 3, **dadurch gekennzeichnet, dass** das Verbinden der ersten und zweiten Formteile (11, 12), des Verbindungselements (15) und/oder des Flächenelements (16) durch Verkleben und/oder durch Laminieren geschieht.

5. Verfahren nach einem der Ansprüche 1 bis 4, **dadurch gekennzeichnet, dass** vor dem Zusammenfügen der ersten und zweiten Formteile (11, 12) das Verbindungsmittel (18) zwischen dem ersten Formteil (11) und dem Verbindungselement (15) an der Profilvorderkante (5) aushärtet oder ausgehärtet ist.

6. Rotorblatt (1) für eine Windenergieanlage, wobei das Rotorblatt (1) eine Längserstreckung aufweist, die sich von einer Rotorblattwurzel (2) im Wesentlichen zu einer Rotorblattspitze (3) erstreckt, wobei wenigstens in einem Bereich des Rotorblatts (1) ein aerodynamisches Querschnittsprofil (4, 4', 4") vorgesehen ist, das eine Profilvorderkante (5) und eine Profilhinterkante (6) aufweist, die über eine Saugseite (7) und eine Druckseite (8) des Querschnittsprofils (4, 4', 4") verbunden sind, wobei für die Saugseite (7) und für die Druckseite (8) des Rotorblatts (1) jeweils wenigstens ein erstes Formteil (11) und wenigstens ein zweites Formteil (12) vorgesehen sind, die wenigstens im Bereich der Rotorblattspitze (3) an der Profilvorderkante (5) und an der Profilhinterkante (6) miteinander mittels jeweils wenigstens eines Verbindungsmittels (18, 19) und/oder Verbindungselements (15) verbunden sind, wobei an der Saugseite (7) oder der Druckseite (8) im Bereich der Rotorblattspitze (3) eine Entwässerungsbohrung (9) vorgesehen ist, **dadurch gekennzeichnet, dass** im Bereich der Rotorblattspitze (3) ein Flächenelement (16) vorgesehen ist, das in Richtung auf die Rotorblattwurzel (2) zu wenigstens bis zur Entwässerungsbohrung (9) reicht, wobei das Flächenelement (16) die Verbindungsmittel (18, 19) und/oder Verbindungselemente (15) an der Profilvorderkante (5) und der Profilhinterkante (6) kontaktiert oder damit verbunden ist und im Bereich der Profilhinterkante (6) für Verbindungsmittel (18, 19) im Wesentlichen undurchlässig bündig mit dem wenigstens einen ersten Formteil (11) abschließt.

7. Rotorblatt (1) nach Anspruch 6, **dadurch gekennzeichnet, dass** das Flächenelement (16) eine ein- oder mehrlagige Glasfasermatte oder ein Aluminiumblech umfasst.

8. Rotorblatt (1) nach Anspruch 6 oder 7, **dadurch gekennzeichnet, dass** das Flächenelement (16) zur Rotorblattspitze (3) hin an eine Adapterrippe (20) eines Blitzschutzes (10) anschließt oder auf einer Adapterrippe (20) eines Blitzschutzes (10) aufgelegt ist.

9. Rotorblatt (1) nach einem der Ansprüche 6 bis 8, **dadurch gekennzeichnet, dass** das Flächenelement (16) an seinem von der Rotorblattspitze (3) abgewandten Ende (16.4) im Bereich zwischen den Verbindungsmitteln (18, 19) mit dem zweiten Formteil (12) verbunden ist oder einen Abstand von weniger als 10 mm, insbesondere weniger als 3 mm, von dem zweiten Formteil (12) aufweist.

10. Rotorblatt (1) nach einem der Ansprüche 6 bis 9, **dadurch gekennzeichnet, dass** das Verbindungselement (15) und das Flächenelement (16) einstückig ausgebildet sind.

11. Rotorblatt (1) nach einem der Ansprüche 6 bis 10, **dadurch gekennzeichnet, dass** das wenigstens eine Verbindungselement (15) an der Profilvorderkante (5) eine, insbesondere gewirkte oder gewebte, Klebelasche umfasst, die die Saugseite (7) und die Druckseite (8) überlappt und mit den ersten und zweiten Formteilen (11, 12) verklebt und/oder laminiert ist.

12. Windenergieanlage mit einem Rotorblatt (1) nach einem der Ansprüche 6 bis 11.

13. Verwendung eines Flächenelements (16) in einem Rotorblatt (1) nach einem der Ansprüche 6 bis 11 für eine Windenergieanlage, das im Bereich der Rotorblattspitze (3) eine Entwässerungsbohrung (9) aufweist, zum Freihalten der Entwässerungsbohrung (9) von einem Verbindungsmittel (18, 19).

## Claims

1. A method of manufacturing a rotor blade (1) for a wind turbine, wherein along its length, which extends from a rotor blade root substantially to a rotor blade tip (3), the finished rotor blade (1) has at least one region, in which the rotor blade has an aerodynamic cross sectional profile (4, 4', 4"), which has a profile front edge (5) and a profile rear edge (6), which are connected via a suction side (7) and a pressure side (8) of the cross sectional profile (4, 4', 4"), wherein at least one first and at least one second, in the longitudinal direction of the rotor blade (1), fabricated moulded component (11, 12) are provided for a suction side (7) and a pressure side (8) of the rotor blade (1), which are to be connected together in the regions of the profile front edge (5) and the profile rear edge (6), **characterised by** the following method steps;
- a connecting element (15) is connected, at least in the region of the rotor blade tip (3), to the profile front edge (5) by means of a connecting means (18) to an inner side of the at least one first moulded component (11), wherein the connecting element (15) projects at the profile front edge (5) beyond the first moulded component (11),
- a surface element (16) is connected to the connecting element at the profile front edge (5) or is integral with the connecting element (15) in the region of the rotor blade tip (3), wherein the surface element (16) terminates in the region of the profile rear edge (6) substantially flush with the first moulded component (11),
- the at least one second moulded component (12) is jointed to the first moulded component (11), wherein at the profile front edge (5) an inner side of the second moulded component (12) is connected to the portion of the connecting element (15) projecting beyond the first moulded component (11) and at the profile rear edge (6) a connecting means (19) is inserted between the first and second moulded components (11, 12),
- a drainage bore (9) is bored or disposed in the region of the first moulded component (11) terminated by the surface element (16) of the profile rear edge (6).

2. A method as claimed in claim 1, **characterised in that** the surface element (16) is connected at its edge (16.4) remote from the rotor blade tip (3) in the region between the connecting means (18, 19) to the second moulded component (12) in a flush manner.

3. A method as claimed in claim 1 or 2, **characterised in that** the surface element (16) is positioned with its edge (16.3) arranged towards the rotor blade tip against a lightning protection adapter rib (20) or applied to a lightning protector adapter rib (20).

4. A method as claimed in one of claims 1 to 3, **characterised in that** the connection of the first and second moulded components (11, 12), the connecting element (15) and/or the surface element (16) is effected by adhesive and/or by laminating.

5. A method as claimed in one of claims 1 to 4, **characterised in that** before jointing the first and second moulded components (11, 12) the connecting means (18) between the first moulded component (11) and the connecting element (16) on the profile front edge (5) is cured.

6. A rotor blade (1) for a wind turbine, wherein the rotor blade (1) has a length, which extends from a rotor blade root (2) substantially to a rotor blade tip (3), wherein provided at least in one region of the rotor blade (1) there is an aerodynamic cross sectional profile (4, 4', 4"), which has a profile front edge (5) and profile rear edge (6), which are connected by way of a suction side (7) and a pressure side (8) of the cross section profile (4, 4', 4"), wherein at least one first moulded component (11) and at least one second moulded component (12) are provided for the suction side (7) and for the pressure side (8), respectively, of the rotor blade (1), which at least in the region of the rotor blade tip, are connected together at the profile front edge (5) and at the profile rear edge (6) by means of at least one respective connecting means (18, 19) and/or connecting element (15), wherein provided at the suction side (7) or the pressure side (8) in the region of the rotor blade tip there is a drainage bore (9), **characterised in that** in the region of the rotor blade tip a surface element (16) is provided which extends in the direction towards the rotor blade root (2) to at least the drainage bore (9), wherein the surface element (16) contacts the connecting means (18, 19) and/or connecting elements (15) at the profile front edge (5) and the profile rear edge (6) or is connected thereto and terminates in the region of the profile rear edge (6) for connection means (18, 19) in a substantially impermeable manner flush with the at least one moulded component (11).

7. A rotor blade (1) as claimed in claim 6, **characterised in that** the surface element (16) includes a single or multiple layer glass fibre mat or an aluminium plate.

8. A rotor blade (1) as claimed in claim 6 or 7, **characterised in that** the surface element (16) adjoins an adapter rib (20) of a lightning protector (10) towards the rotor blade tip (3) or is applied to an adapter rib (20) of a lightning protector (10).

9. A rotor blade (1) as claimed in one of claims 6 to 8, **characterised in that** the surface element (16) is connected to the second moulded component (12) at its end (16.4) remote from the rotor blade tip (3) in the region between the connecting means (18, 19) or has a spacing of less than 10mm, in particular less than 3mm, from the second moulded component (12).

10. A rotor blade (1) as claimed in one of claims 6 to 9, **characterised in that** the connecting element (15) and the surface element (16) are of one-piece construction.

11. A rotor blade (1) as claimed in one of claims 6 to 10, **characterised in that** the at least one connecting element (15) at the profile front edge (15) includes a, particularly knitted or woven, adhesive flap, which overlaps the suction side (7) and the pressure side (8) and is secured by adhesive to the first and second moulded components (11, 12) and/or is laminated to them.

12. A wind turbine with a rotor blade (1) as claimed in one of claims 6 to 11.

13. Use of a surface element (16) in a rotor blade (1) as claimed in one of claims 6 to 11 for a wind turbine, which has a drainage bore (9) in the region of the rotor blade tip (3) for keeping the drainage bore (9) free from a connecting means (18, 19).

## Revendications

1. Procédé de fabrication d'une pale de rotor (1) pour une éolienne, dans lequel la pale de rotor fabriquée (1) comporte dans sa longueur au moins une zone s'étendant à partir de la racine de la pale de rotor (2) vers une extrémité de la pale de rotor (3) et ayant en coupe transversale (4, 4 ', 4 ") un profil aérodynamique, qui présente un bord d'attaque (5) et un bord de fuite (6), qui présente un côté d'aspiration (7) et un côté de pression (8) du profil transversal (4, 4', 4 "), ces cotés étant reliés, dans lequel au moins une première et au moins une seconde pièces moulées fabriquées (11, 12) sont prévues et s'étendent dans la direction longitudinale du côté d'aspiration (7) au côté de pression (8) de la pale de rotor (1), qui doivent être respectivement connectés l'un à l'autre dans les zones du bord d'attaque (5) et du bord de fuite (6), **caractérisé par** les étapes de procédé suivantes:
- dans la zone de l'extrémité de la pale de rotor (3) ou du bord d'attaque (5), au moins un élément de liaison (15) comprend un côté intérieur constitué d'au moins une première partie du moule (11) par l'intermédiaire d'un moyen de liaison (18), dans lequel l'élément de liaison (15) s'étend vers le bord d'attaque (5) sur la première partie du moule (11),
- dans la zone de l'extrémité de la pale de rotor (3) un élément de surface (16) de l'élément de liaison (15) est formé sur le bord d'attaque (5) ou est solidaire de l'élément de liaison (15), dans lequel l'élément de surface (16) dans la zone du bord de fuite (6) se termine sensiblement au niveau de la première partie du moule (11),
- au moins une seconde partie du moule (12) est assemblée avec la première partie du moule (11), dans lequel le bord d'attaque (5) fait saillie à partir de l'élément de liaison (15) situé à l'intérieur de la seconde partie du moule (12), la première partie de moule (11) étant également reliée au niveau du bord de fuite (6), un moyen de liaison (19) étant inséré entre la première et la seconde partie du moule (11, 12),
- au travers de l'élément de surface (16) du bord de fuite (6) dans la zone confinée de la première partie de moule (11), un trou de drainage (9) est situé ou percé.

2. Procédé selon la revendication 1, **caractérisé en ce que** l'élément de surface (16) situé à l'extrémité de la pale de rotor (3) ferme, avec son bord opposé (16.4) et entre les moyens de liaison (18, 19), la seconde partie du moule (12).

3. Procédé selon la revendication 1 ou la revendication 2, **caractérisé en ce que** le bord de l'élément de surface (16) situé à l'extrémité de la pale de rotor (16.3) est connecté à une nervure de l'adaptateur de protection contre la foudre (20) ou placé sur une nervure de l'adaptateur de protection contre la foudre (20).

4. Procédé selon l'une quelconque des revendications 1 à 3, **caractérisé en ce que** la jonction entre la première et la seconde partie du moule (11, 12) de l'élément de liaison (15) et / ou l'élément de surface (16) est réalisée par collage et / ou par stratification.

5. Procédé selon l'une quelconque des revendications 1 à 4, **caractérisé en ce qu'**avant l'assemblage de la première partie et de la seconde partie du moule (11, 12), le moyen de liaison (18) entre la première partie du moule (11) et l'élément de liaison (15) sur le bord d'attaque (5) sont durci.

6. Pale de rotor (1) pour une éolienne, dans laquelle la pale de rotor (1) présente une extension longitudinale qui s'étend à partir de la racine de la pale de rotor (2) en direction de l'extrémité de la pale de rotor (3), dans laquelle, dans au moins une zone de la pale de rotor (1), un profil aérodynamique en coupe transversale (4, 4 ', 4 ") est prévu, ce profil présentant un bord d'attaque (5) et un bord de fuite (6), comprenant un côté d'aspiration (7) et un côté de pression (8), ces côtés étant reliés au profil aérodynamique en coupe transversale (4, 4 ', 4 "), dans laquelle au moins une première partie du moule (11) et au moins une seconde partie du moule (12) sont prévues pour le côté d'aspiration (7) et pour le côté de pression (8) de la pale de rotor (1), l'ensemble étant relié au moins dans la zone de l'extrémité de la pale de rotor (3) au niveau du bord d'attaque (5) et du bord de fuite (6) au moyen d'au moins un moyen de liaison (18, 19) et / ou d'un élément de liaison (15), dans laquelle, sur le côté d'aspiration (7) ou le côté de pression (8) dans la zone de l'extrémité de la pale de rotor (3), un trou de drainage (9) est prévu, **caractérisée en ce que** dans la zone de l'extrémité de la pale de rotor (3) un élément de surface (16) est prévu, qui, dans la direction de la racine de la pale de rotor (2), s'étend au moins jusqu'à l'orifice de drainage (9), dans laquelle l'élément de surface (16), des moyens de liaison (18, 19) et / ou l'élément de liaison (15) sur le bord d'attaque (5) et le bord de fuite (6) sont mis en contact ou reliés à la zone du bord de suite par des moyens de liaison (18, 19) et affleure de manière pratiquement imperméable au moins une première partie du moule (11).

7. Pale de rotor (1) selon la revendication 6, **caractérisée en ce que** l'élément de surface (16) comprend un mat de fibre de verre à une ou à plusieurs couches ou une feuille d'aluminium.

8. Pale de rotor (1) selon la revendication 6 ou la revendication 7, **caractérisée en ce que** l'élément de surface (16) de l'extrémité de la pale de rotor (3) se connecte à une nervure de l'adaptateur (20) d'un système de protection contre la foudre (10) ou est placé sur une nervure de l'adaptateur (20) d'un système de protection contre la foudre (10).

9. Pale de rotor (1) selon l'une quelconque des revendications 6 à 8, **caractérisée en ce que** l'élément de surface (16), à partir de l'extrémité de la pale de rotor (3) opposée à l'extrémité (16.4) dans la zone entre les moyens de liaison (18, 19) est relié à la seconde partie du moule (12), séparée d'une distance inférieure à 10 mm, en particulier inférieure à 3 mm de la seconde partie du moule (12).

10. Pale de rotor (1) selon l'une quelconque des revendications 6 à 9, **caractérisée en ce que** l'élément de liaison (15) et l'élément de surface (16) sont formés en une seule pièce.

11. Pale de rotor (1) selon l'une quelconque des revendications 6 à 10, **caractérisée en ce qu'**au moins un élément de liaison (15) comprend un rabat adhésif au niveau du bord d'attaque (5), en particulier tricoté ou tissé, le rabat adhésif comprenant le côté d'aspiration (7) et chevauche le côté de pression (8), le rabat adhésif étant collé et/ou stratifié avec la première partie et la seconde partie du moule (11, 12).

12. Installation éolienne comportant une pale de rotor (1) selon l'une quelconque des revendications 6 à 11.

13. Utilisation d'un élément de surface (16) dans une pale de rotor (1) selon l'une quelconque des revendications 6 à 11, pour une éolienne comportant un trou de drainage (9) situé dans la zone de l'extrémité de pale de rotor (3), le dit élément étant destiné à maintenir le trou de drainage (9) par un moyen de liaison (18, 19).
